# EUROPEAN PATENT APPLICATION

(11) **EP 2 711 936 A1**
(43) Date of publication of application: **26.03.2014**
(21) Application number: 11864833.6
(22) Date of filing: 02.05.2011
(51) Int. Cl.: H01B 7/17, B60L 11/18, H01M 10/46, H02J 7/00

(54) **RADIATING NOISE MINIMIZING METHOD AND CHARGING CABLE**

(71) Applicant: The Chugoku Electric Power Co., Inc., Hiroshima-shi Hiroshima 730-8701 (JP); Nittetsu Elex Co., Ltd., Tokyo 104-0033 (JP)
(72) Inventor: OKUBO, Norihiro, Hiroshima-shi Hiroshima 730-8701 (JP); MASAOKA, Shinya, Hiroshima-shi Hiroshima 730-8701 (JP); KISHIMOTO, Michihiro, Kitakyushu-shi Fukuoka 805-8555 (JP)
(74) Representative: Moreland, David
(86) International application number: PCT/JP2011/060538
(87) International publication number: WO 2012/150631

(57) **Abstract**

Radiated noise generated from the charging cable of an electric vehicle is reduced. At least a current feeding line 41 through which a charging current is carried, a ground wire 42 and a shielded wire 44, that are bound is used as a charging cable 4 that feeds charging current from the charger 2 to the electric vehicle 3, and the ground wire 42 and the shielded wire 44 are grounded on the charger side 2, and the shielded wire 44 and the ground wire 42 are short circuited on the electric vehicle 3 side as well. Further, a toroidal core 150 is provided on the charger 2 side of the charging cable 4. The ground wire 42 need not be grounded on the electric vehicle 3 side. The shielded wire 44 is grounded on the charger 2 side by allowing a grounded tape-like conductor 120 come into face contact.

## Description

### [Technical Field]

The present invention relates to a radiated noise reduction method and a charging cable, and more particularly, to a technology of reducing noise radiated from a charging cable that supplies a charging current from a charger to electric vehicles.

### [Background Art]

PTL 1 describes configuring a shielded cable by covering the outside of a signal line covered by a first insulating material with a magnetically permeable member, covering the outside of the magnetically permeable member with a conductive member, and further covering the outside of the conductive member with a second insulating material in order to provide a shielded cable having favorable shielding characteristics even when a large electric current is carried, therethrough, and being capable of reducing eddy-current generated in the conductive member to reduce the calorific value.

PTL 2 describes using a semiconductive coating layer for a shield layer in a cable for wire harnesses including a conductor, an insulating layer formed on the outside of the insulating layer, and a shield layer formed on the outside of the insulating layer, to provide a cable for wire harnesses that has excellent shield property and can be manufactured at low cost, and allows easy connection work of connectors and the like.

PTL 3 describes an LC filter for preventing output of high frequency noise from the electrical system of a plug-in hybrid vehicle to the power supply outside the vehicle, when charging the power supply device from the power supply outside the vehicle, in an electric system for plug-in hybrid vehicles mounted with a charging device for vehicles.

PTL 4 describes a noise prevention cover equipped with radio wave noise absorbing sheet configured of a conductive material that is easy to handle and is configured to prevent scattering of radio wave noise generated from a charger, as a cover for a charger or a device mounted with a charger, and equipped with a cable for grounding the radio wave noise absorbing sheet.

### [Citation List]

### [Patent Literature]

[PTL 1]
   Japanese Patent Application Laid-open Publication No. 2003-68151
[PTL 2]
   Japanese Patent Application Laid-open Publication No. 2005-235716
[PTL 3]
   International Publication No. 2009/034877 pamphlet
[PTL 4]
   Japanese Utility Model Application Laid-open Publication No. Hei7-30455

### [Summary of Invention]

### [Technical Problem]

When charging an electric vehicle using a charger such as a fast charger and the like, noise generated from the charger (particularly, high frequency noise generated from the switching circuit of the power source) becomes a problem. Shielding the main body of the charger, for example, can be considered as a method of reducing noise generated from the charger. However, noise transmitted through a charging cable that feeds a charge current from a charger to an electric vehicle and radiated thereafter cannot be reduced by only shielding the main body of the charger.

The present invention has been made in view of such background and an object thereof is to provide a radiated noise reduction method that can reduce noise transmitted through a charging cable that feeds a charge current from a charger to an electric vehicle and radiated thereafter, and a charging cable.

### [Solution to Problem]

A main aspect of the present invention for solving the aforementioned problem is a method of reducing noise radiated from a charging cable that charges a charging current from a charger to an electric vehicle, the method including using at least a current feeding line through which the charging current is carried, a ground wire and a shielded wire, bound as the charging cable, and grounding the ground wire and the shielded wire on a charger side, and short circuiting the shielded wire and the ground wire on an electric vehicle side.

In this way, noise radiated from the charging cable can be certainly reduced by short-circuiting the shielded wire and the ground wire on the electric vehicle side.

Another aspect of the present invention is the above method of reducing radiated noise wherein a toroidal core is provided on the charger side of the charging cable.

In this way, noise radiated from the charging cable can be further certainly reduced by providing a toroidal core to the charger side of the charging cable.

Another aspect of the present invention is the above method of reducing radiated noise wherein the ground wire is not grounded on the electric vehicle side.

According to the present invention noise radiated from the charging cable can be certainly reduced even when the ground wire is not grounded on the electric vehicle side, as above or when it is difficult to ground the ground wire on the electric vehicle side.

Another aspect of the present invention is the above method of reducing radiated noise wherein the current feeding line, the ground wire and the shielded wire that are covered with an insulated jacket, is used as the charging cable, a connector connected to a charging port of the electric vehicle and an insulated grip portion integrally formed with the connecter are provided at an electric vehicle side end portion of the charging cable, and the shielded wire and the ground wire are short circuited at the electric vehicle side by stripping off the jacket proximate the grip portion and allowing the shielded wire and the ground wire come into contact.

When wires covered with an insulated jacket is used as the charging cable in this way, a shielded wire and a grounded line can be easily short-circuited on the electric vehicle side by stripping off the jacket proximate the insulated grip portion formed integral with the connector that is to be connected to the charging port, and allowing the shielded wire and the ground wire come into contact at that part.

Another aspect of the present invention is the above method of reducing radiated noise wherein the shielded wire is grounded on the charger side by allowing a grounded tape-like conductor come into face contact with a charger side portion of the shielded wire.

In this way, the shielded wire can be certainly grounded on the charger side by grounding the shielded wire on the charger side by allowing face contact between the tape-like conductor and the part of the shielded wire on the charger side. And hereby, noise radiated from the charging cable can be certainly reduced.

The other problems and the solutions for the same disclosed by this application are exposed by the Description of Embodiments, the description of the figures, and others.

### [Advantageous Effects of Invention]

According to the present invention, noise radiated from the charging cable that feeds a charging current from a charger to an electric vehicle can be reduced.

### [Brief Description of Drawings]

[Fig. 1] Fig. 1 is a diagram illustrating a schematic configuration of the charging system 1.
[Fig. 2] Fig. 2 is a block diagram of a fast charger shown as an example of the charger 2.
[Fig. 3] Fig. 3 is a side view showing an example of the connector unit 41.
[Fig. 4] Fig. 4 is a diagram of the grip portion 412 seen from the terminal group 4111 side.
[Fig. 5] Fig. 5 is a schematic diagram illustrating the structure of the charging cable 4.
[Fig. 6] Fig. 6 illustrates the measuring system 6 used for verification.
[Fig. 7] Fig. 7 is a diagram showing the measured attenuating radiated noise.
[Fig. 8] Fig. 8 is a diagram showing the measured attenuating radiated noise.
[Fig. 9] Fig. 9 is a diagram showing a summary of the measuring conditions and the measurement results.
[Fig. 10] Fig. 10 is a diagram illustrating the measuring system 7 used for measuring the electric field intensity.
[Fig. 11] Fig. 11 is a diagram showing the measured electric field intensity.
[Fig. 12] Fig. 12 is a diagram showing the measured electric field intensity.
[Fig. 13] Fig. 13 is a diagram showing a summary of the measuring conditions and the measurement results.

### [Description of Embodiments]

In the following, description of an embodiment of the present invention will be given with reference to the drawings.

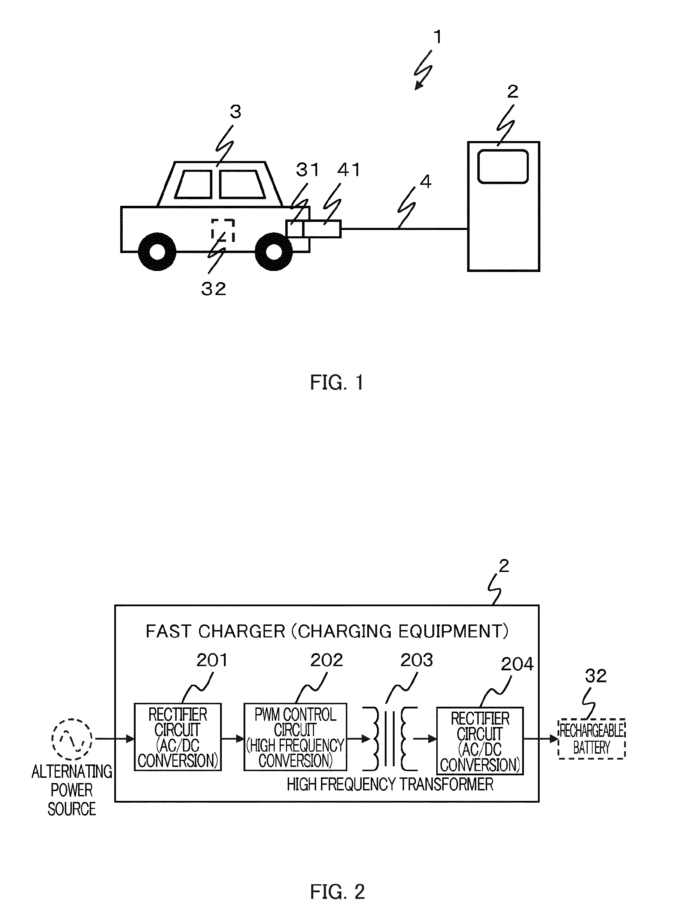

Fig. 1 shows an example of the charging system 1 for electric vehicles provided at charging stations, parking areas of various facilities and the like. As shown in Fig. 1, the charging system 1 includes a charger 2, an electric vehicle 3 such as an electric car mounted with a rechargeable battery 32 having electricity charged with the charger 2, and a charging cable 4 that supplies charging current from the charger 2 to the electric vehicle 3.

The charger 2 is, for example, a fast charger and generates a switching noise from the switching circuit and the like that configures the power source. Fig. 2 is a block diagram of the fast charger shown as an example of the charger 2. As shown in Fig. 2, this fast charger includes a rectifier circuit 201, a pulse width modulation (PWM) control circuit 202, a high frequency transformer 203 and a rectifier circuit 204.

The rectifier circuit 201 is a circuit for converting an alternating current supplied from an alternating-current power source such as a commercial power system and the like, and is configured using rectifier bridges and the like. The PWM control circuit 202 is a circuit for converting output from the rectifier circuit 201 to a high frequency pulse, and is configured using a switching element whose on/off timing is controlled with a circuit that controls the output voltage. The high frequency transformer 203 transmits to the rectifier circuit 204, energy of high frequency pulse generated by the PWM control circuit 202. The rectifier circuit 204 is a circuit for converting to a direct current, an alternating current input through the high frequency transformer 203, and is configured using a rectifier diode and a smoothing capacitor and the like. One end of the charging cable 4 is connected to, for example, the output stage of the rectifier circuit 204.

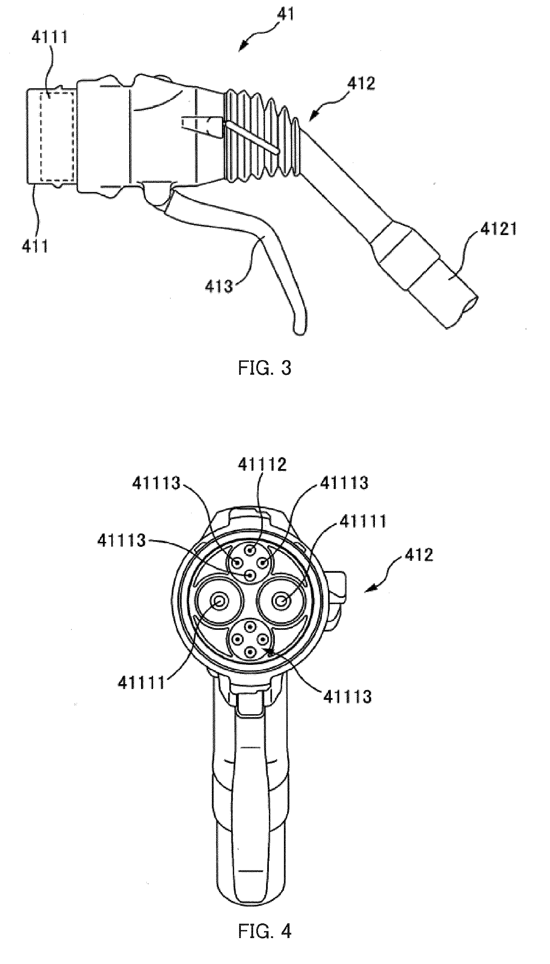

Fig. 3 is a side view of the connector unit 41 provided to the other end of the charging cable 4. As shown in Fig. 3, this connector unit 41 includes a charging connector 411 provided with a terminal group 4111 to be connected to the charging port 31, an insulated grip portion 412 integrally formed with this charging connector 411, and a handle 413 extending from the grip portion 412 to control feeding of the charging current.

The grip portion 412 is, for example, made of resin and is integrally formed with the charging connector 411 by molding and the like. The charger 2 side of the grip portion 412 is in a cylindrical shape and the end portion of the charging cable 4 on the electric vehicle 3 side is accommodated inside the this cylindrical portion 4121. The current supply line 41, the ground wire 42, the control line 43, and the shielded wire 44 of the later described charging cable 4 are connected to the terminal group 4111 inside the grip portion 412.

Fig. 4 is a diagram of the grip portion 412 seen from the terminal group 4111 side. As shown in Fig. 4, the terminal group 4111 includes power feed terminals 41111 to which the later described current supply lines 41 are connected, a ground terminal 41112 to which the later described ground wire 42 is connected, and terminals 41113 to which the later described control lines 43 are connected.

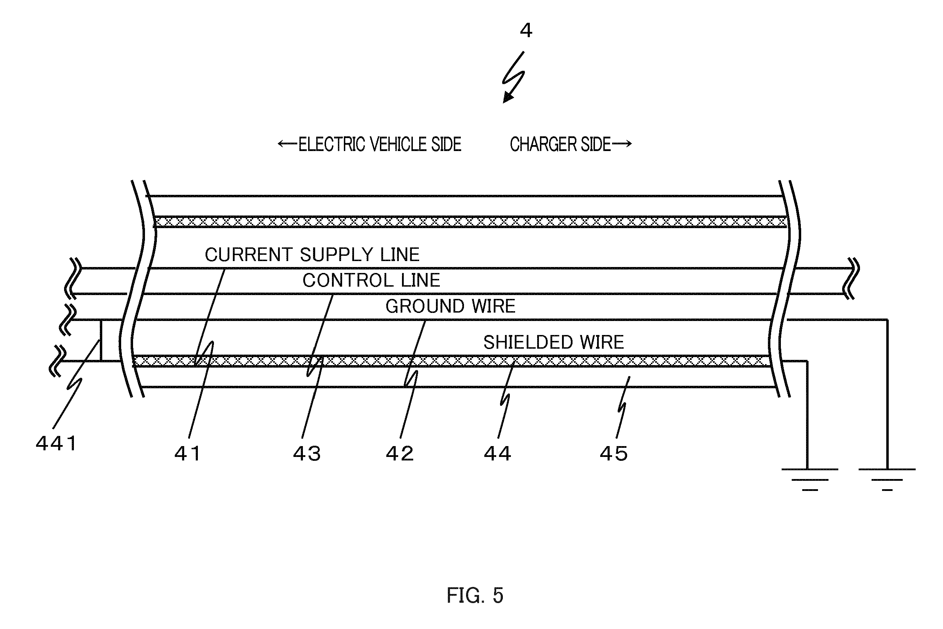

Fig. 5 is a schematic diagram illustrating the structure of the charging cable 4. As shown in Fig. 5, the charging cable 4 has a structure having bound together the current supply lines 41 through which a charging current fed from the charger 2 is carried, the ground wire 42, the control line 43 through which a control signal transmitted or received between the charger 2 and the electric vehicle 3 is carried when controlling the charging current, and the shielded wire 44 that contains these lines and extends in the longitudinal direction of the charging cable 4. And the bundle of the current supply lines 41, the ground wire 42, the control line 43 and the shielded wire 44 is covered with a jacket 45 that is made of insulated resin and the like. Note that, the shielded wire 44 is, for example, braided leads, aluminum foil and the like.

As shown in Fig. 5, both the ground wire 42 and the shielded wire 44 are grounded on the charger 2 side. Further, the ground wire 42 and the shielded wire 44 are short circuited on the electric vehicle 3 side (reference numeral 441). This short circuiting of the ground wire 42 and the shielded wire 44 is, for example, performed by stripping off the jacket 45 proximate the grip portion 412 of the connector unit 41 and allowing the ground wire 42 and the shielded wire 44 come into contact. Note that, the ground wire 42 may be or may not be grounded on the electric vehicle 3 side (for example, the ground wire 42 will be at a higher potential with regard to the ground potential when the rechargeable battery 32 of the electric vehicle 3 is not grounded).

### <Verification of Attenuation>

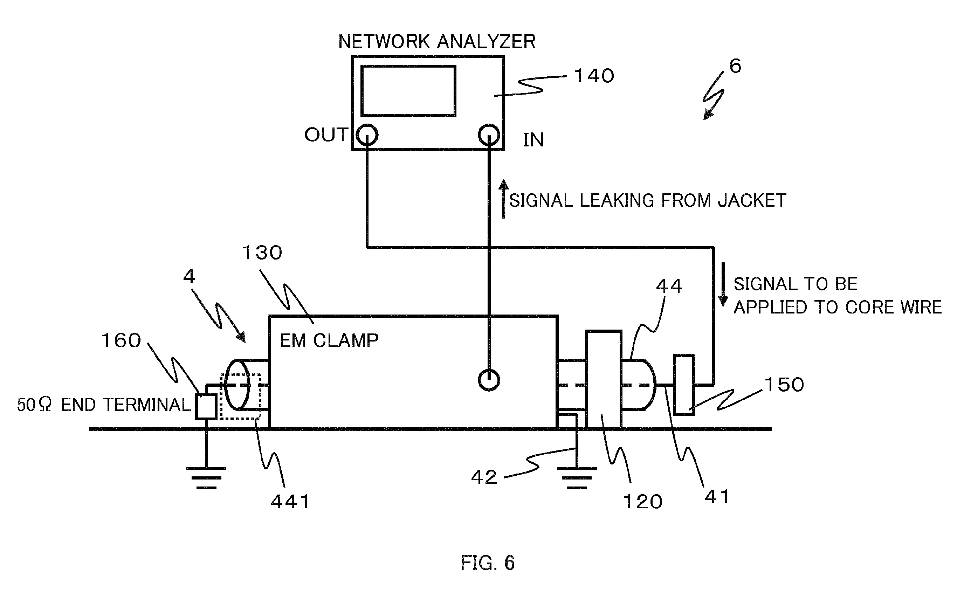

The inventors have measured the attenuation of radiated noise using a network analyzer to verify the effect of attenuating radiated noise in the charging system 1 configured as described above. Fig. 6 illustrates the measuring system 6 used for this verification. As shown in Fig. 6, this measuring system 6 includes a network analyzer 140 corresponding to the charger 2, an electromagnetic (EM) clamp 130 covering the charging cable 4, a terminal resistance 160 (50 ohms in the present example) corresponding to the electric vehicle 3, and a toroidal core 150 provided on the network equalizer 140 side (charger 2 side) of the charging cable 4.

As shown in Fig. 6, the end portion on the network equalizer 140 side (charger 2 side) of the charging cable 4 is inserted through the ring of the toroidal core 150. Further, both the ground wire 42 and the shielded wire 44 are grounded at the network equalizer 140 side (charger 2 side) of the charging cable 4. With regard to the shielded wire 44 among the lines, the shielded wire 44 has the jacket 45 of the charging cable 4 stripped off and exposed, and a copper tape 120 (conductor) in a tape form is made to come into face contact (wound around) with the outer circumference of the exposed shielded wire 44, and then grounded by grounding the copper tape 120. Further as described above, the ground wire 42 and the shielded wire 44 are made to come into contact and short-circuited (reference code 441) at the terminal resistance 160 side (electric vehicle 3 side).

In the measurement system 6 configured as above, the attenuating radiated noise when direct currents were applied to the charging cable 4 were measured for each of the cases where the toroidal core 150 was and was not provided. When measuring, a predetermined current was supplied to the current supply line 41 as a signal corresponding to the charging current from the network analyzer 140. Further, attenuation was measured by inputting to and detecting with the network analyzer 140 a signal leaking from the jacket 45.

Measurements of the cases without providing the toroidal core 150 were performed for each of the plurality of cases where the length ((1) when the length is 50 centimeters, (2) when the length is 25 centimeters, and (3) when the length is 5 centimeters) of the lead (hereinafter, short circuit line) used for connection (short circuiting) the ground wire 42 and the shielded wire 44 were varied. And a case (4) where the ground wire 42 and the shielded wire 44 were not short circuited was also measured for comparison purposes. Note that, in the measuring, calibration was performed with the attenuation of a state with the shielded wire 44 removed set as reference.

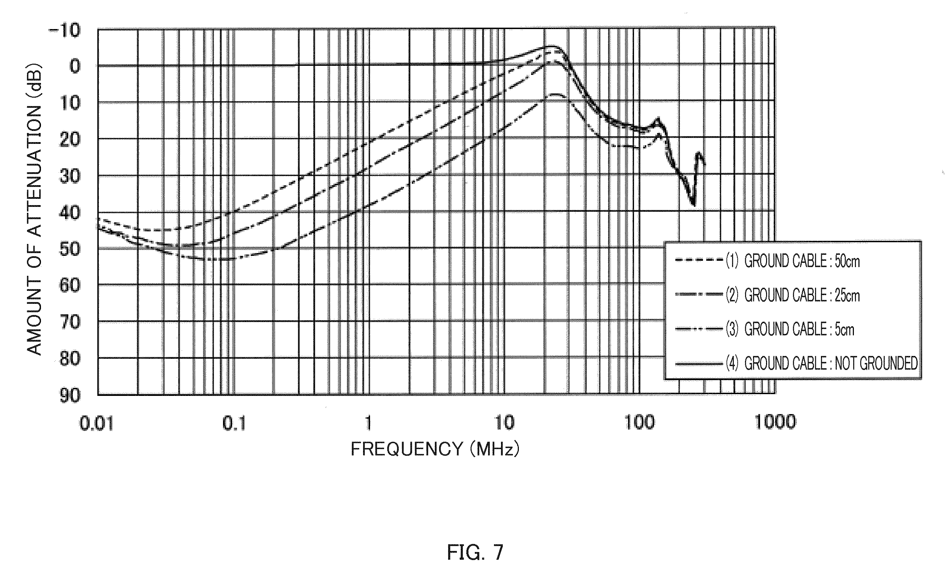

Fig. 7 is a graph showing the measurement results obtained for the cases when the toroidal core 150 was not provided. In this graph, the horizontal axis indicates the frequency (MHz) and the vertical axis indicates the attenuating noise (dB) radiated from the charging cable 4.

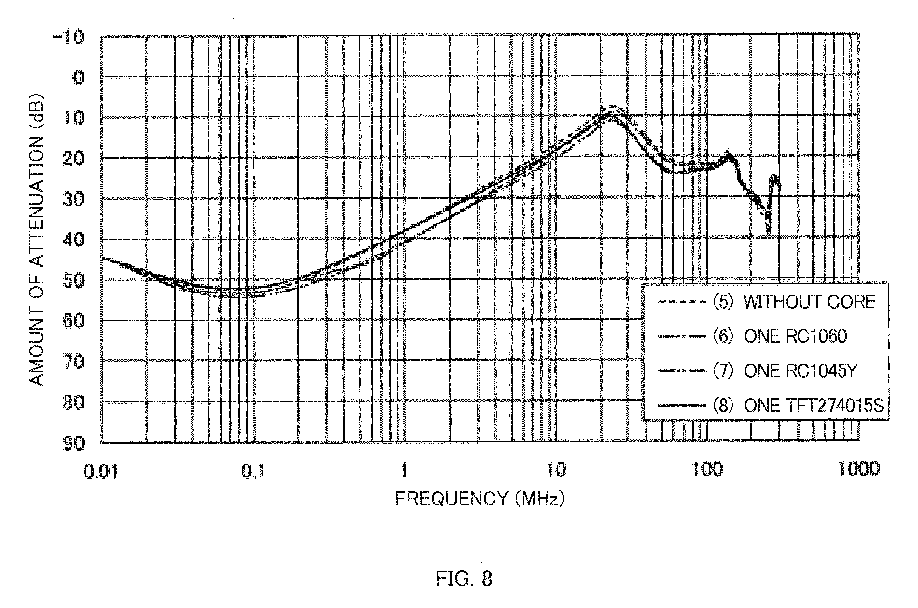

On the other hand, Fig. 8 is a graph showing the measurement results obtained for the cases when the toroidal core 150 was provided. In this graph, the horizontal axis indicates the frequency (MHz) and the vertical axis indicates the attenuating noise (dB) radiated from the charging cable 4. In Fig. 8, (6) shows the results for the case where (one) RC1060 (manufactured by Soshin Electric Co., Ltd.) was provided as the toroidal core 150, (7) shows the results for the case where (one) RC1045Y (manufactured by Soshin Electric Co., Ltd.) was provided as the toroidal core 150, and (8) shows the results for the case where (one) TFT274015S (manufactured by Takachi Electronics Enclosures Co., Ltd.) was provided as the toroidal core 150. Further, measurements were taken for the case (5) where the toroidal core 150 was not provided, for comparison purposes. The length of the short circuit lines were set to 5 centimeters for all the cases.

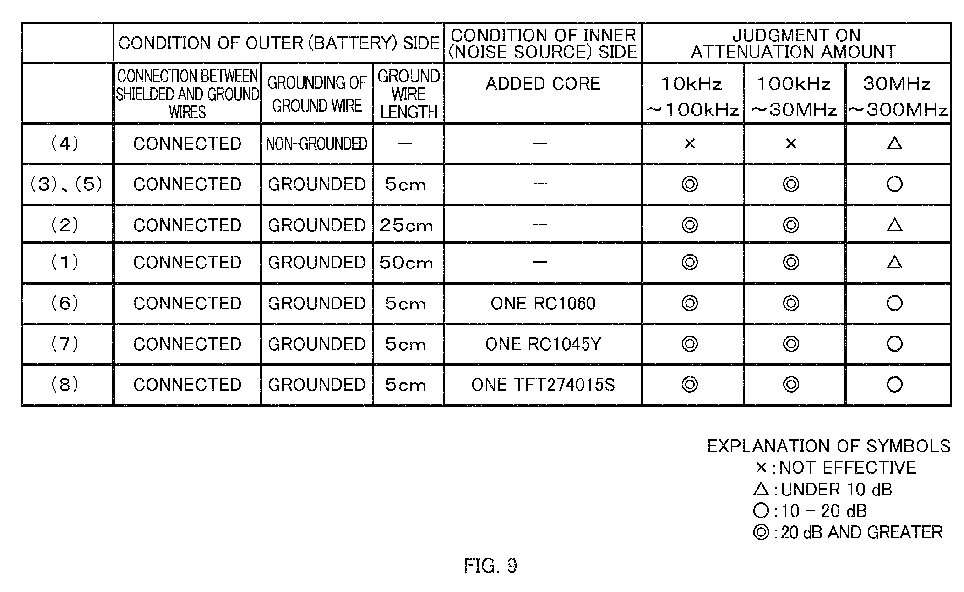

Fig. 9 shows the above measurement results (Fig. 7 and 8) summarized in a table. As shown in (1) to (3) of Figs. 7 and 9, the effect of attenuating radiated noise were confirmed to become larger as the length of the short circuit lines become shorter. Note that, in case (4) where short circuit lines were not provided, very little effect of attenuating radiated noise were recognized for the frequency range of 0.01 MHz to 30 MHz.

Further, as shown in (5) to (8) of Figs. 8 and 9, approximately 5 dB of attenuation was recognized for radiated noise in the frequency band of 30 MHz to 300 MHz (30 MHz to 70 MHz in particular) for the cases where RC1045Y or TFT274015S was used as the toroidal core 150.

### <Measurements of Field Intensity>

For the purpose of verifying the reduction effects of radiated noise in the charging system 1, the inventors have measured the radiated electric field intensity using a spectrum analyzer for the cases where the charging cable 4 was used as the line connecting the AC motor and the inverter that supplies alternating currents to this AC motor (in other words, when the current supply line 41 of the charging cable 4 was used as the cables for the U phase, V phase, W phase and the PE phase of the inverter).

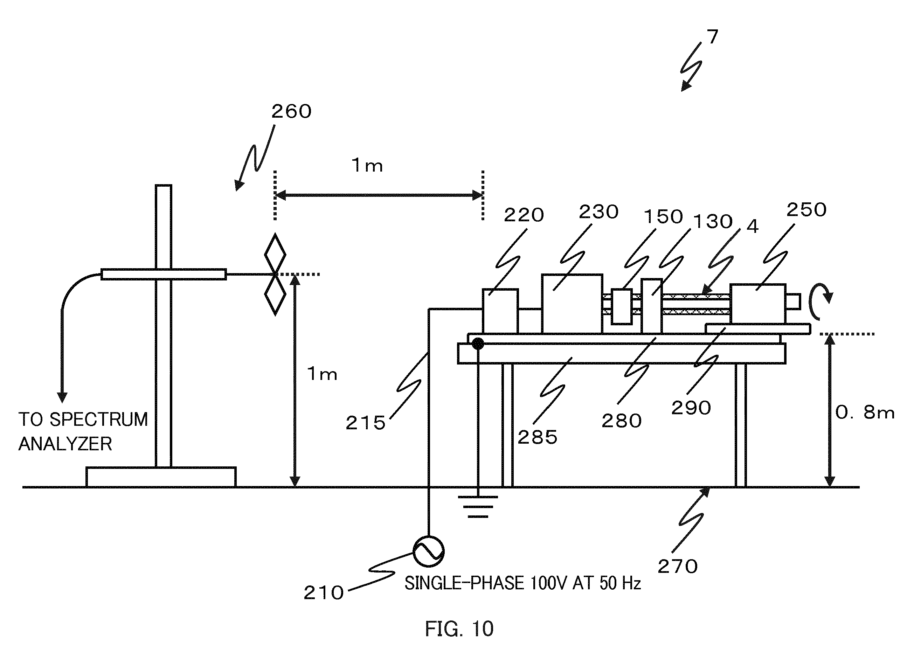

Fig. 10 shows the measurement system 7 used for the measuring. As shown in Fig. 10, this measurement system 7 includes an AC motor 250 (0.4 kW output power), inverter 230 (corresponding to the charger 2) that supplies alternating currents to the AC motor 250, AC power source 210 that supplies power (alternating current of single-phase 100 V at 50 Hz frequency) to the inverter 230, noise filter 220 (HP2010A-UP (Soshin Electric Co., Ltd.)) for removing noise included in the AC power source210, and a biconical antenna 260 that receives radiated noise to supply to the spectrum analyzer (not shown).

Note that, the entire power source cable 215 connecting the AC power source 210 and the noise filter 220, and the charging cable 4 were shielded with aluminum foil when measuring. Further, both the noise filter 220 and the inverter 230 were grounded by directly mounting on the platform 285 of the grounded conductor (iron plate 280). Further, the AC motor 250 was mounted on the platform 285 with an insulating paper 290 intervening therebetween to avoid the electric vehicle 3 from being in a grounded state.

Note that, the noise filter 220, the inverter 230, and the AC motor 250 were provided at a height of 0.8 meters from the ground (reference surface 270). Further, the biconical antenna 260 was provided at a height of 1.0 meter from the reference surface 270. The distance between the biconical antenna 260 and the noise filter 220 was set to one meter.

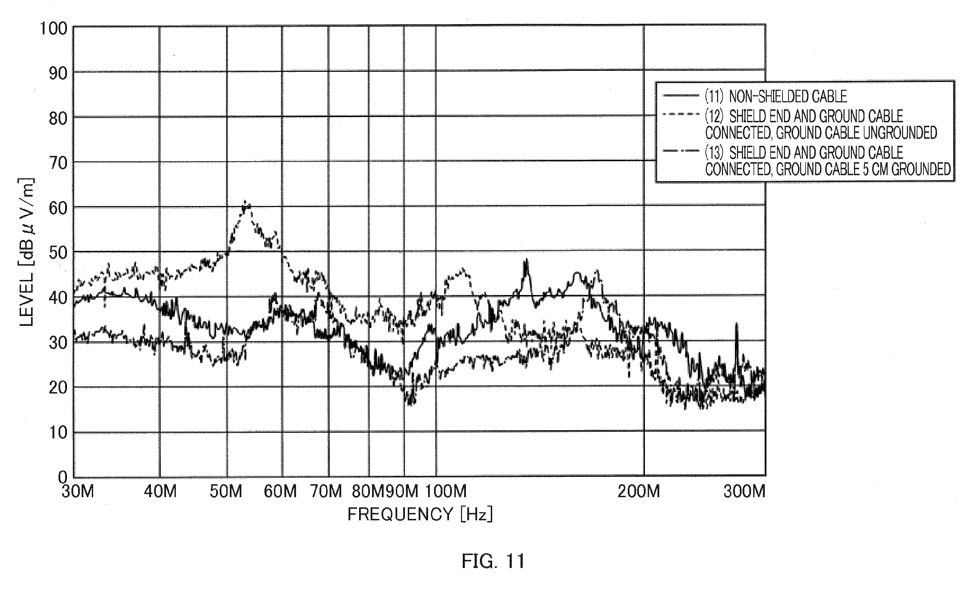

In the measurement system 7 with the above configuration, the electric field intensity was measured for each of the cases where (11) a case where the charging cable without the shielded wire 44 was used, (12) a case where the charging cable 4 was used and the ground wire 42 and the shielded wire 44 were not short circuited, and (13) a case where the charging cable 4 was used and the ground wire 42 and the shielded wire 44 were short circuited (the length of the short circuit line was 5 centimeters). Fig. 11 shows the measurement results. In this graph, the horizontal axis indicates the frequency (MHz) and the vertical axis indicates the level (dBµV/m) of noise radiated from the charging cable 4.

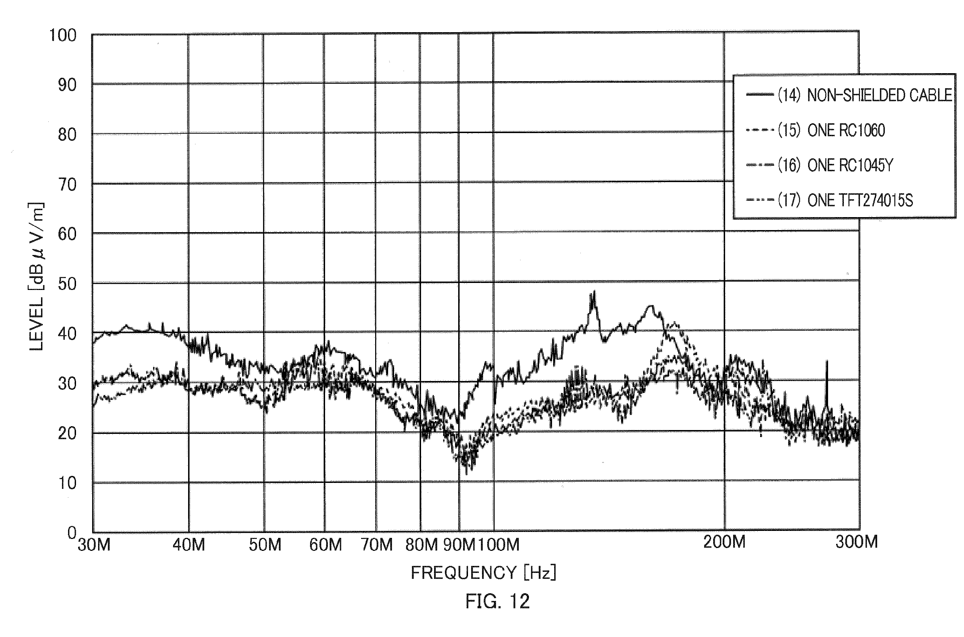

Further, effects in the case where the toroidal core 150 was provided to the current supply line 41 in the measurement system 7 was verified. Fig. 12 is a graph showing the measurement results. In this graph, the horizontal axis indicates the frequency (MHz) and the vertical axis indicates the level (dBµV/m) of noise radiated from the charging cable 4. In Fig. 12, (14) shows the case where the toroidal core 150 was not provided, (15) shows the case where (one) RC1060 was provided as the toroidal core 150, (16) shows the case where (one) RC1045Y was provided as the toroidal core 150, and (17) shows the case where (one) TFT274015S was provided as the toroidal core 150. Note that, the length of the short circuit line was set to 5 centimeters for all the cases.

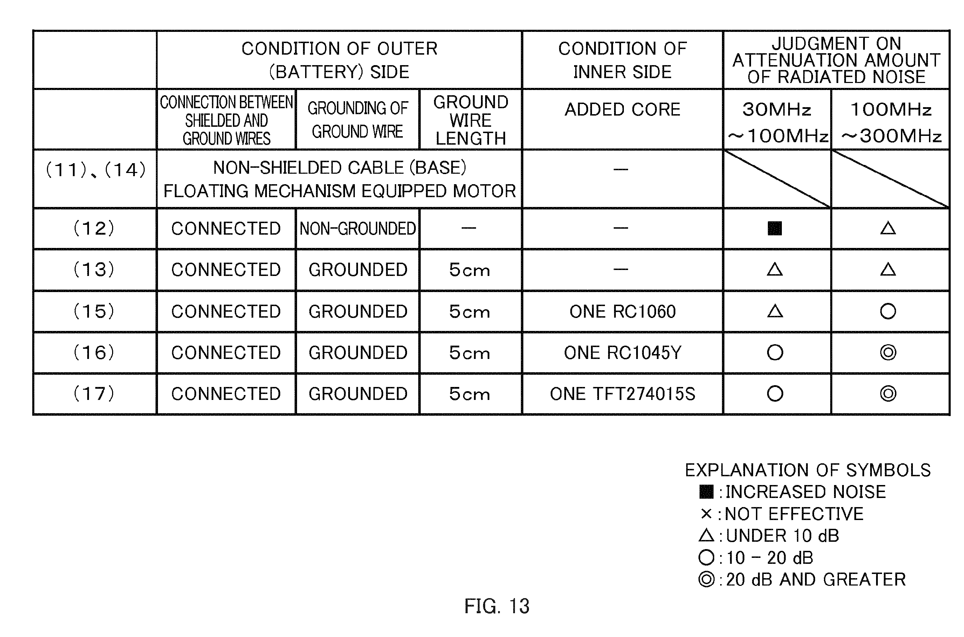

Fig. 13 shows the above measurement results (Fig. 11 and 12) summarized in a table. As shown in (11) to (13) of Figs. 11 and 13, compared with the case (11) using the charging cable not having the shielded wire 44, the case (12) using the charging cable 4 and not short circuiting the ground wire 42 and the shielded wire 44 reduces noise in the region of 100 MHz and greater but has a higher level of radiated noise in the frequency region of 30 MHz to 100 MHz. On the other hand, in the case (13) using the charging cable 4 and short circuiting the ground wire 42 and the shielded wire 44 reduces the radiated noise in all frequencies between 30 MHz and 300 MHz compared to the case (11) using the charging cable without the shielded wire 44.

As shown in (15) to (17) of Figs. 12 and 13, a certain amount of noise reduction effect was recognized for all of the cases (15) to (17) (cases where the toroidal core 150 was provided). Further, the cases ((16) and (17)) where the RC1045Y or the TFT274015S was provided were found to show a noise reduction effect (approximately 10dB) in the entire frequency range of 30 MHz to 300 MHz.

As explained above, noise radiated from the charging cable 4 was found be capable of being certainly reduced by using current supply lines 41 through which a charging current is supplied, a ground wire 42, and a shielded wire 44 bounded together as the charging cable 4, grounding the ground wire 42 and the shielded wire 44 on the charger 2 side, and short circuiting the ground wire 42 and the shielded wire 44 on the electric vehicle 3 side. Further, it was found that noise radiated from the charging cable 4 can be further certainly reduced by providing the toroidal core 150 on the charger 2 side of the charging cable. Further, the noise radiated from the charging cable 4 was found to be capable of being certainly reduced even in the case where the ground wire 42 is not grounded on the electric vehicle 3 side or in the case where it is difficult to ground the ground wire 42 on the electric vehicle 3 side.

Hereinabove, description was given of embodiments of the present invention, however, the above-described embodiment is intended to facilitate understanding of the present invention and should not be construed as limiting to the embodiments set forth here. It is a matter of course that the present invention may be modified and improved without departing from the scope of the invention, and equivalents thereof are also encompassed by the invention.

### [Reference Signs List]

- 2: charger
- 3: electric vehicle
- 31: charging port
- 32: rechargeable battery
- 4: charging cable
- 41: current supply line
- 42: ground wire
- 43: control line
- 44: shielded wire
- 45: jacket
- 411: charging connector
- 412: grip portion
- 150: toroidal core

## Claims

1. A method of reducing noise radiated from a charging cable that charges a charging current from a charger to an electric vehicle, the method comprising:
using at least a current feeding line through which the charging current is carried, a ground wire and a shielded wire, bound as the charging cable; and
grounding the ground wire and the shielded wire on a charger side, and short circuiting the shielded wire and the ground wire on an electric vehicle side.

2. The method of reducing radiated noise according to claim 1, wherein
a toroidal core is provided on the charger side of the charging cable.

3. The method of reducing radiated noise according to claim 1 or 2, wherein
the ground wire is not grounded on the electric vehicle side.

4. The method of reducing radiated noise according to any one of claims 1 through 3, wherein
the current feeding line, the ground wire and the shielded wire that are covered with an insulated jacket, is used as the charging cable;
a connector connected to a charging port of the electric vehicle and an insulated grip portion integrally formed with the connecter are provided at an electric vehicle side end portion of the charging cable; and
the shielded wire and the ground wire are short circuited at the electric vehicle side by stripping off the jacket proximate the grip portion and allowing the shielded wire and the ground wire come into contact.

5. The method of reducing radiated noise according to any one of claims 1 through 4, wherein
the shielded wire is grounded on the charger side by allowing a grounded tape-like conductor come into face contact with a charger side portion of the shielded wire.

6. A charging cable that charges a charging current from a charger to an electric vehicle comprising:
at least a current feeding line through which the charging current fed from the charger to the electric vehicle is carried, a ground wire and a shielded wire are bound; and
the ground wire and the shielded wire are grounded on a charger side, and the shielded wire and the ground wire are short circuited on an electric vehicle side.

7. The charging cable according to claim 6, wherein a toroidal core is provided on the charger side.

8. The charging cable according to claim 6 or 7, wherein the ground wire is not grounded on the electric vehicle side.

9. The charging cable according to any one of claims 6 through 8, wherein
the current feeding line, the ground wire and the shielded wire are covered with an insulated jacket;
a connector connected to a charging port of the electric vehicle and an insulated grip portion integrally formed with the connecter are provided at an electric vehicle side end portion of the charging cable; and
the shielded wire and the ground wire are short circuited at the electric vehicle side by stripping off the jacket proximate the grip portion and allowing the shielded wire and the ground wire come into contact.

10. The charging cable according to any one of claims 6 through 9, wherein
the shielded wire is grounded on the charger side by allowing a grounded tape-like conductor come into face contact with a charger side portion of the shielded wire.
